# EUROPEAN PATENT APPLICATION

(11) **EP 1 980 957 A1**
(43) Date of publication of application: **15.10.2008**
(21) Application number: 07007391.1
(22) Date of filing: 11.04.2007
(51) Int. Cl.: G06F 17/30

(54) **System and method for accessing files in a physical data storage**

(71) Applicant: SOFTWARE AG, D-64297 Darmstadt (DE)
(72) Inventor: Wenkel, Ralph, 64367 Mühltal (DE); Ristow, Gerald, Dr., 64347 Griesheim (DE)
(74) Representative: Heselberger, Johannes

(57) **Abstract**

The invention concerns a system for accessing files (70) in a physical data storage, comprising an application programming interface (API) layer (10), the API layer (10) including an API (11, 60) which extends the class Java.io.file (12, 50) to include methods for file access requests. The system further comprises at least one internal layer (20), the internal layer (20) transforming a file access request into a database call. Finally, the system comprises a storage layer (40) with a database (100), the database (100) being adapted to access the physical storage in response to the database call.

## Description

### 1. Technical field

The present invention relates to a system and a method for accessing files in a physical data storage of a database.

### 2. The prior art

Files of a database are usually stored in a physical data storage, such as a RAID system, wherein the files are arranged with a certain file-folder structure. If a search for a desired file is to be performed, each folder and file contained in the physical storage needs to be opened and examined. This is a standard procedure performed by an operating system.

An application running on a client, which needs access to a file, must provide suitable mechanisms to initiate such a procedure. In the prior art, files of a XML database can be stored and retrieved via the well-known programming language Java using the Workspace Versioning and Configuration Management Application Programming Interface (WVCM API). A description of the WVCM API can for example be found at *http:llwww.webdav.orgldeltavlwvcm.* Internally, the WVCM API is using the WebDAV protocol, which is an extension of the HTTP protocol.

However, the level of abstraction of the WVCM API is rather low and the effort for simple file storage, reading and finding is very high. In particular, the somewhat complicated concepts of the WebDAV protocol and the WVCM API must be known to a developer. Further, searching files and content of files in the database are only possible with a recursive walk in the file-folder structure and the reading of every folder and file. In other words, for finding specific files, every folder and file content has to be send over a communication line to the client to be locally analyzed by logic implemented on the client side. It is apparent that this approach is slow and inefficient, since it requires a substantial bandwidth of the communication line between the client and the database server, before a requested file is obtained.

It is therefore the technical problem underlying the present invention to provide a system and a method which facilitates the access to a file in a physical storage of a database and thereby overcomes at least some of the above outlined disadvantages of the prior art.

### 3. Summary of the invention

In one aspect of the invention, this problem is solved by a system for accessing files in a physical data storage, comprising an application programming interface (API) layer, the API layer including an API which extends the class Java.io.file to include at least one method for file access requests. The system further comprises at least one internal layer, the internal layer transforming a file access request into a database call. Finally, the system comprises a storage layer with a database, the database being adapted to access the physical storage in response to the database call.

One of the advantages obtained by the present invention is the programming efficiency gained for a developer of database applications by extending the class Jave.io.file with methods for file access requests. The Java.io.file is well-known by all experienced Java developers. It provides a simple and efficient interface for locating, reading and finding files. There is only a small effort to learn a new interface that is based on Java.io.file for file access.

In one embodiment, the API extending the class Java.io.file comprises methods for finding a file, retrieving a file, searching the content of a file and obtaining a version of a file. The methods of the extension preferably do not directly access the file system of the database but rather the internal layer. However, depending on the specific implementation there may be more or only a part of the mentioned methods in the extending API.

In one embodiment, the at least one internal layer is preferably adapted to transform the file access request into a XQuery call, wherein the API extending the class Java.io.file may include a method for initiating the execution of a XQuery call by the internal layer. XQuery is a highly efficient language for querying XML databases using for example the indices typically provided in such a database.

According to another aspect, the internal layer can transform the file access request into a call according to the WebDAV extensions to the HTTP protocol. Using the internal layer for such a transformation effectively shields the details of the WebDAV protocol from the client, who is only concerned with the extended Java based API. The WebDAV protocol extends the functionality of HTTP to facilitate distributed authoring by providing a network protocol for creating interoperable, collaborative applications.

In one embodiment of the invention, both the internal layer and the storage layer are provided on a data base server. As a result, the client side logic can be reduced and only necessary content will be send over the communication line from the database to the client.

Further possible improvements of the described system are defined in further dependent claims.

According to a another aspect, the present invention relates to a method for accessing files in a physical data storage using a system of any of the embodiments described above.

### 4. Short description of the drawings

In the following detailed description presently preferred embodiments of the invention are further described with reference to the following figures:
- Fig. 1:: A schematic representation of the various layers of the system in an exemplary embodiment of the present invention;
- Fig. 2:: An example of the extension of the class Java.io.file in an exemplary embodiment of the present invention;
- Fig. 3:: A schematic representation of the process for storing a file in a database with an embodiment of the system according to the invention;
- Fig. 4:: A schematic representation of the process for retrieving a file in a database with an embodiment of the system according to the invention.

### 5. Detailed description of preferred embodiments

In the following, presently preferred embodiments of the invention are described with reference to accessing files of a XML database. However, it is to be understood that the invention is not restricted to accessing XML files of such a database. On the contrary, the concepts of the present invention can be applied to accessing any type of files of any physical storage of a database.

One important example, however, is the case of a registry / repository of a service oriented (software) architecture SOA. In a SOA various processing objects are made available to a user in the network as independent services that can be accessed in a standardized way. The objects of the SOA interoperate based on formal definitions which are independent from the underlying hardware and software platform and programming language.

Managing a SOA is a complex and difficult task. Maintaining an overview of the whole landscape of processing objects such as web services, some of which may dynamically change over time, is important to assure that an application using the various processing objects properly operates. Applicant of the present invention has therefore developed a centralized registry / repository available under the trade name CentraSite™. CentraSite is effectively a XML database, comprising among others descriptions of the processing objects, in particular the web services of the SOA. A web service can be described by a Web Services Description Language (WSDL) file. The WSDL file contains typically information about the function, the data, the data type and the exchange protocols of the respective web service. A client intending to send a request to a certain web service can obtain the WSDL file from CentraSite to find out how to access the web service. An effective access to the WSDL files stored in CentraSite is therefore important both for the design time and the runtime of the SOA.

Another example of a database, which could be efficiently accessed with the present invention, can be provided by the Tamino XML server of applicant, which is a general purpose XML server for data management using Internet technologies.

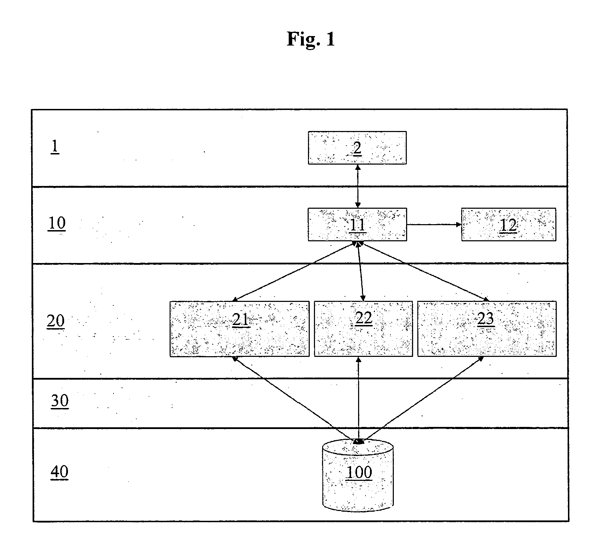

Fig. 1 presents an overview of the various layers of the system according to an embodiment of the present invention. As can be seen, there is an application layer 1 comprising a client 2. The client may be for example a developer of the SOA needing access to some WSDL files of the CentraSite database or an application, which dynamically selects a certain web service during runtime and also needs to access the WSDL file in order to find out, how to address the web service.

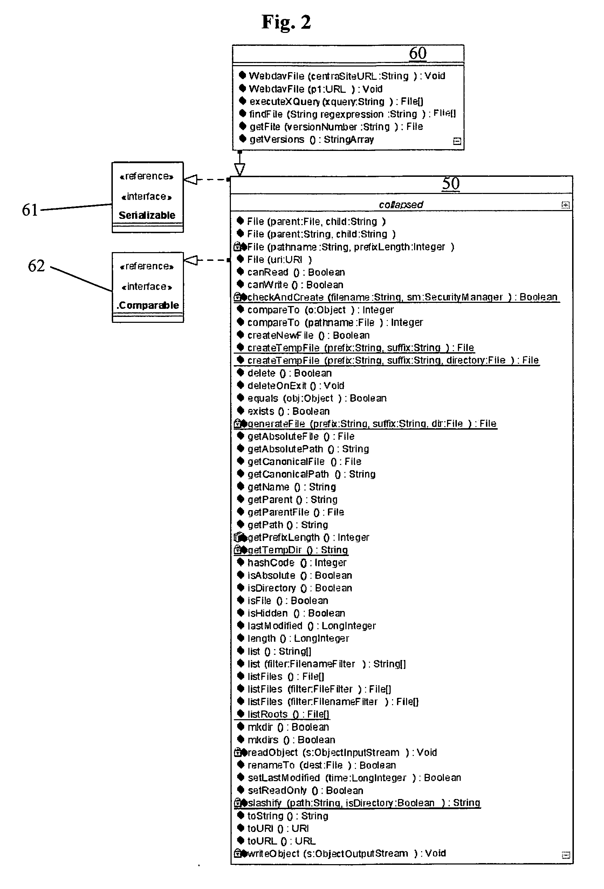

For issuing the file access request, the client 2 uses an API 11 of a further layer, the so-called API layer 10. The API 11 extends the Java.io.file 12 by methods for accessing files as described further below with reference to Fig. 2. In one embodiment, the extension is called "WebdavFile". Depending on the method called by the client 2, the next layer of the system of Fig. 1, the internal layer 20, transforms the call into a suitable database request. To this end, the internal layer 20 generates in one embodiment a data base request in accordance with the WebDAV protocol (the WebDAV extensions to the HTTP protocol), e.g. by using the Workspace Versioning and Configuration Management API (WVCM API) 23.

Accordingly, rather than having directly to access the WVCM API, the invention uses a Java.io.file based view of the files and folders stored in database. This leads to a low effort for a developer to get started because all Java programmers are familiar with the Java.io.file class.

In another embodiment also shown in Fig. 1, the method call of the API 11 is transformed by a query API 21 into an XQuery call. As will be apparent from the detailed description below, the transformation into an XQuery call allows to efficiently search and access the content of the database. Whereas the file accesses in the prior art do not provide benefits from a database based storage of the files, this embodiment of the present invention allows an easy way to locate files with XQuery, wherein the benefits of a XML database are applied and the knowledge of how the files are stored.

In addition to the WVCM API 23 and the query API 21, there could be more transformation units in the internal layer 20, as schematically indicated by the unit 22 in Fig. 1. Further, there could be more (internal) layers below the internal layer 20 additionally processing the file request. In fact, the boundary between the various layers 20, 30 and 40 is not fixed so that the number of layers may vary from implementation to implementation.

Fig. 2 schematically presents the extension of the Java.io.file in accordance with an embodiment of the present invention. As can be seen, the Java.io.file class 50 comprises a number of methods concerning the processing of files. The extension 60 of the Java.io.file 50 provides in addition methods for creating and managing file in a database such as CentraSite (cf. for example the method "WebDAVFile (centraSiteURL: String) in Fig. 2).

In the embodiment of Fig. 2, the extension 60 further comprises a method for specifically initiating a XQuery call (cf. the method "executeXQuery(xquery: string) in Fig. 2) and methods for finding and getting files from the database. Finally, there is a method for obtaining the version of a certain file.

In addition, Fig. 2 shows two further, optional interfaces 61 and 62 to be implemented. The interface 61 called "serializable" serves for serialisation and transmission of a file and the interface 62 "comparable" serves for comparisons.

An interface based on Java.io.file and with the possibility to use XQuery on a XML database will be a better and more efficient way to find and read files. The level of abstraction is much higher compared to the WVCM API. It can be used without understanding the WebDAV protocol. There is only a small effort to understand the new interface because it is based on the well known Java.io.file class. Preselection without client interaction for name, folder, properties, user, date/time, content and so on are possible. Methods can hide the structure of stored files and QXuery calls, making them invisible for the user. If the database requires authentication, further methods could be added to the extension 60, possibly with username and password as parameters.

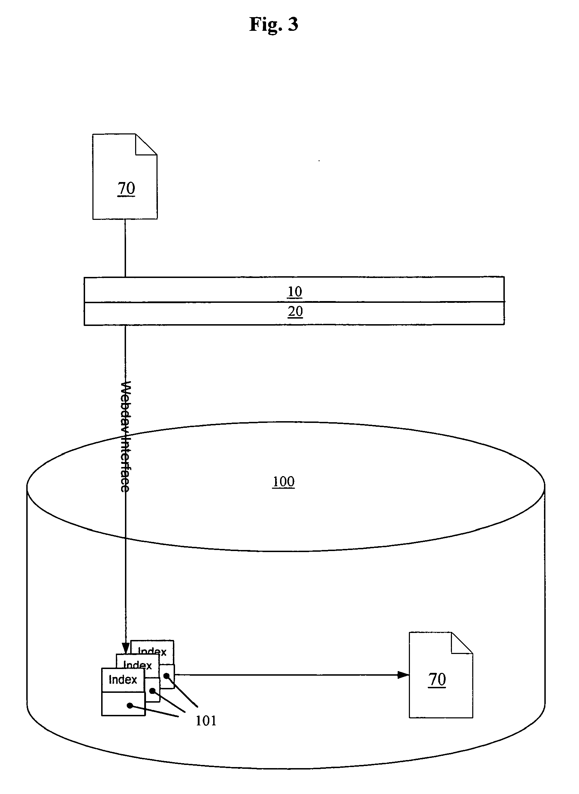

Fig. 3 illustrates a specific file access with the described system, namely the storing of a new file in the XML database. Using the API layer 10 and its extension of the Java.io.file 11 (not shown in Fig. 3), the file is handed down to the internal layer 20 and the WVCM API 23 (also not explicitly shown on Fig. 3), which provides the necessary WebDAV interface to store the XML file 70 in the database 100.

Finally, the XML file 70 is stored in an XML database 100. Automatically generated indices 101 will help to reduce the effort on finding files, locating them and determining the content of files. During file storage, different indexes 101 will be written and the file 70 will be stored in an efficient way. This makes the effort to locate and read files much lower.

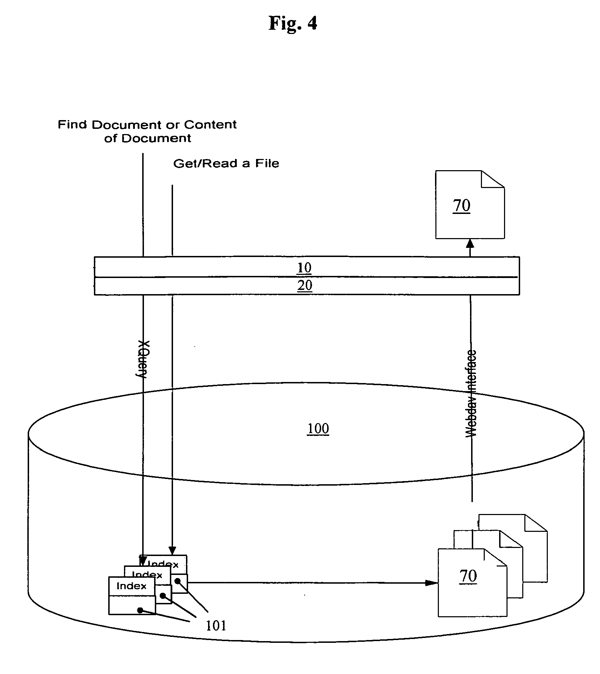

Fig. 4 illustrates the reverse type of file access, i.e. the retrieval of a file 70 from the XML database 100 using XQuery. XQuery is a standardized way to access XML data. By placing the XML files 70 in a XML database and using indices 101 and optimized XQuery calls, the search results are available much faster. This applies to searching for file names, file attributes, file properties and for content in the files. In particular, the search is server side based without client logic or interaction. No transfer of subresults e.g. folder content to the client 2 is necessary.

The XML files stored as WebDAV resources can be mapped to database collections in a flat structure, for example a collection "documents". In that case all files are directly located in that collection and not in a recursive folder structure. XQuery can then be used to search in that collection. For example the following XQuery:
*for $i in collection ("documents")*
*return tdf:getProperties ($i)*
returns all properties for all stored XML files in the collection "documents". Such properties are:
- Name and Location of the file
- owner
- Date/Time information: modification date, last modified date, creation date
- Length
- Content type
- Version number

Other methods for more properties are available.

A filter can dramatically reduce the amount of data. Using the name, the file can directly be located and returned. Searching for filenames, folders, owner, creation-and modification- date are easily possible. With only one XQuery call it is possible to find one ore more files independent in which folder it is located below a given path. A corresponding XQuery example reads:
*for $i in tdf:resource("*/*ino:dav*/*ino:dav*/*projects*/*WSDL*/*", "infinity") return tdf:getProperties($i)*
which returns all files from the location/path "/ino:dav/ino:dav/projects/WSDL/" and its subfolders. If the Depth "1" is used instead of "infinity" all files from that folder without subfolders are returned. "0" returns information about the appropriate folder only.

XQuery can also be used to restrict the result set from the database search to files with specific patterns in their full names (which includes the path). Consider the following XQuery

```
 declare namespace D="DAV:"
 for $i in collection("documents")
 let Sp : = tdf:getProperties(Si)
 where tf:containsText($p/D:href,
 "/CentraSite/CentraSite/ino:dav/ino:dav/projects/BusinessProcessMetaData/*.xml")
 return $i
```

The "*for*" statement in the second line chooses all documents from the collection "*documents*". The next line maps the WebDAV properties of the result set to the variable $p. In the where statement in line 4, the result set is restricted to documents in the folder "/CentraSite/CentraSite/ino:dav/ino:dav/ projects/BusinessProcessMetaData/" which have a file extension of xml. The statement
*where tf:containsText($p*/*D:href, "**/*BusinessProcessMetaData*/**")*
would retrieve all documents with a string of "BusinessProcessMetaData" in their full name. If documents whose full names are ending in gif or jpg are sought for, the statement must read
*where tf:containsText($p*/*D:href, "*.gif") or tf:containsText($p*/*D:href, "*.jpg")*

It is also possible to use regular expressions in the search string if the underlying XQuery implementation supports this.

Using XQuery, a given file folder structure on a physical storage can be mapped to different database collections. For example a root directory of the storage can be mapped to a specific collection so that an XQuery search looks only into one specific collection where all relevant files are stored without hierarchy. In the example above, files were selected by looking at their Webdav properties via the build in function "tdf.getProperties()". The selection is done on the database side making the search very efficient. The returned list can provide the content or the properties of the selected files.

The invention is also applicable if non-XML files are stored in the XML database. In this case searching over file properties like date, time or storage location is still as fast as for XML data. Searching the content is not possible by default, but can be achieved by connecting an automatic indexer which supports a variety of document and image formats like DOC, PDF, GIF, JPEG.

To illustrate the technical benefits of the present invention, the very few statements of a program are shown below, which are necessary for retrieving all WSDL files in a directory "MyFirstProject" including its subdirectories and also for finding all files and folders with the string "*page*" in this directory and its subdirectories:

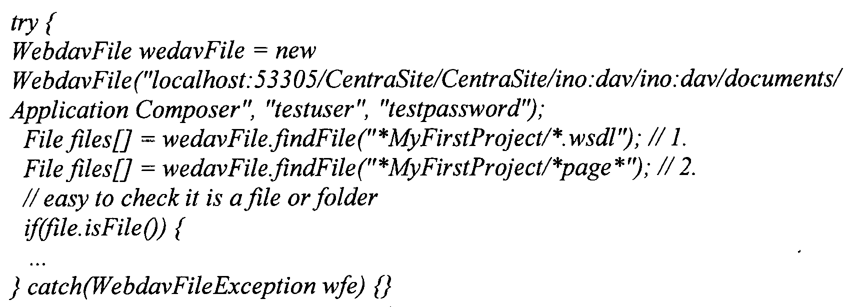

If instead the known WVCM API is directly used to perform these file related operations, more than a hundred lines of Java code would be necessary to accomplish the same task.

## Claims

1. System for accessing files (70) in a physical data storage, comprising:
a. an application programming interface (API) layer (10), the API layer (10) comprising an API (11, 60) extending the class Java.io.file (12; 50) to include at least one method for file access requests;
b. at least one internal layer (20), the internal layer transforming a file access request into a database call; and
c. a storage layer (40) comprising a database (100), the database (100) being adapted to access the physical storage in response to the database call.

2. System according to claim 1, wherein the API (11, 60) extending the class Java.io.file (12, 50) comprises methods for finding a file (70), retrieving a file (70), searching the content of a file (70) and obtaining a version of a file (70).

3. System of claim 1 or 2, wherein the API (11, 60) extending the class Java.io.file (12, 50) comprises methods for authentication at the database (100).

4. System of one of the preceding claims, wherein the at least one internal layer (20, 30) is adapted to transform the file access request into an XQuery call.

5. System according to the preceding claim, wherein the API (11, 60) extending the class Java.io.file (12, 50) includes a method for initiating the execution of an XQuery call by the internal layer (20).

6. System according to any of the preceding claims, wherein the internal layer (20) transforms the file access request into a call according to the WebDAV extensions to the HTTP protocol.

7. System according to any of the preceding claims, wherein both the internal layer (20) and the storage layer (40) are provided on a database server.

8. System according to any of the preceding claims, wherein the database (100) is a XML database.

9. System according to any of the preceding claims, wherein the database (100) is a registry of a service oriented architecture (SOA) and wherein the files (70) to be accessed are WSDL files describing the services of the SOA.

10. Method for accessing files (70) in a physical data storage using a system of any of the preceding claims 1 - 9.

## Amended claims

### Amended claims in accordance with Rule 137(2) EPC.

**1.** System for accessing files (70) in a physical data storage, comprising:
a. an application programming interface (API) layer (10), the API layer (10) comprising an API (11, 60),
b. at least one internal layer (20), *accessed by the API (11, 60) and providing a database call in response to a file access request to a database (100);* and
c. a storage layer (40) comprising *the* database (100), the database (100) being adapted to access the physical storage in response to the database call
***characterized in that***
d. the API (11, 60) extends the class Java.io.file (12; 50) to include at least one method for file access requests *to a database (100); and*
e. *the internal layer (20) is adapted to transform a call of the method for file access requests of the extended Java.io.file (12; 50) into a database call using one of a plurality of transformation units (21, 22, 23)*.
